# FASCICULE DE BREVET EUROPEEN

(11) **EP 0 714 086 B1**
(45) Date de publication et mention de la délivrance du brevet: **15.12.1999**
(21) Numéro de dépôt: 95402365.1
(22) Date de dépôt: 24.10.1995
(51) Int. Cl.: G10D 9/02

(54) **Nouvelle ligature pour bec d'instrument à vent à anche simple**
Ringklemme für Mundstück eines Blasinstruments mit einem einzelnen Zungenblatt
Ligature for the mouthpiece of a wind instrument with a single reed

(30) Priorité: 23.11.1994 FR 9414025
(43) Date de publication de la demande: 29.05.1996
(73) Titulaire: ETABLISSEMENTS VANDOREN Société Anonyme dite:, F-75018 Paris (FR)
(72) Inventeur: Van Doren, Bernard, F-75018 Paris (FR); Hillion, Marc, F-83250 La Londe Les Maures (FR); Charpentier, Marc, Valcros, F-83250 La Londe Les Maures (FR)
(74) Mandataire: Jolly, Jean-Pierre

(56) Documents cités:
- FR-A- 2 438 311
- US-A- 2 352 372
- US-A- 4 056 997
- US-A- 4 080 866

## Description

La présente invention concerne une nouvelle ligature pour bec d'instrument à vent à anche simple.

On sait que, dans des instruments tels que la clarinette ou le saxophone, l'anche est maintenue en place sur le bec de l'instrument par un collier, appelé ligature, qui épouse la forme générale du bec et prend appui contre la face externe bombée de l'anche, tandis que la face plane de celle-ci est en contact avec une partie plane du bec.

La ligature est fendue suivant l'une des ses génératrices, et des moyens d'assemblage tels que des vis et des alésages filetés sont prévus sur les deux parties qui se font face, pour les rendre solidaires l'une de l'autre et provoquer ainsi une action de serrage de l'anche.

Une ligature de ce type est décrite, par exemple, dans le brevet français N° 2 438 311, au nom de la Demanderesse.

Le système d'assemblage par vis de ces ligatures permet d'exercer un effet de serrage gradué sur l'anche, qui est très apprécié des musiciens professionnels ou expérimentés, mais il est relativement complexe à mettre en oeuvre, puisqu'il nécessite des actions de vissage successives sur différentes vis.

En outre, l'effort de serrage se répartit inégalement sur les deux parties de la ligature se faisant vis-à-vis, ce qui se traduit par des contraintes distribuées de façon non homogène sur l'anche et le bec.

US-A-4 056 997 divulgue une ligature pour bec d'instrument à vent comportant une seule vis de serrage coopérant avec un filetage pratiqué dans un élément cylindrique logé dans un fourreau solidaire du côté de la ligature. Dans un autre domaine technique (US-A- 2 352 372), on connaît des bagues de serrage comportant un boulon à alésages opposés et décalés sur la longueur du boulon.

La présente invention vise à remédier aux inconvénients des systèmes connus en proposant une ligature qui peut être mise en place sur le bec de l'instrument à vent préférablement à l'aide d'une unique vis de serrage, qui, lorsqu'on la visse pour appliquer l'anche sur le bec de l'instrument, exerce des efforts dans des directions opposées, mais sensiblement égaux, sur les deux parties de la ligature disposées en regard.

A cet effet, l'invention a pour objet une ligature souple en un matériau déformable élastiquement, apte à équiper le bec d'un instrument à vent, cette ligature ayant un profil sensiblement complémentaire de celui du bec, de manière à pouvoir enserrer celui-ci et une anche interposée entre le bec et la ligature, deux parties espacées de la ligature comportant des bords respectifs disposés en vis-à-vis et sensiblement parallèles aux génératrices du bec, cette ligature étant caractérisée en ce que lesdites deux parties comportent chacune au moins un alésage fileté disposé en regard de l'alésage de l'autre partie transversalement à l'axe du bec, les filetages des deux alésages ayant des pas inversés, tandis qu'une vis de serrage, présentant deux filetages à pas inversés décalés suivant sa longueur et complémentaires des filetages des deux alésages, est prévue pour coopérer avec ceux-ci en vue d'assembler d'une manière réglable les deux parties de la ligature disposées en vis-à-vis.

Il est clair que, par vissage de la ou les vis simultanément dans chacun des deux alésages associés, on exercera une force de traction pratiquement identique et de directions opposées sur les deux parties en regard de la ligature, ce qui assurera un serrage équilibré et symétrique de celle-ci sur le bec de l'instrument et sur l'anche dont il est équipé.

On pourra utiliser plusieurs vis, associées chacune à un ensemble de deux alésages à filetages inversés, mais, dans une forme de mise en oeuvre avantageuse de l'invention, on utilisera une unique vis, qui permettra à l'instrumentiste de mettre en place une anche de façon particulièrement aisée sur le bec de son instrument.

De préférence, un fourreau cylindrique à axe sensiblement parallèle à celui du bec de l'instrument sera prévu suivant chacun des bords disposés en vis-à-vis de la ligature, à l'extérieur de celle-ci, et, dans chaque fourreau sera logé un élément cylindrique libre de pivoter autour de son axe dans ce cylindre, les alésages filetés avec lesquels coopérera la vis de serrage étant pratiqués dans ces éléments cylindriques, des lumières étant naturellement prévus dans les fourreaux en regard des alésages pour le passage de la vis. De cette manière, à mesure que l'on desserera ou serrera la vis, les deux parties en regard pourront se déplacer librement l'une par rapport à l'autre et par rapport au bec de l'instrument, tandis que les éléments cylindriques pivoteront librement dans leur fourreau pour que les alésages qu'ils comportent restent en permanence coaxiaux à la vis de serrage.

Dans une forme de mise en oeuvre préférée de l'invention, un élément rigide incurvé de profil complémentaire de celui du bec de clarinette ou de l'anche, servant d'élément de calage, est interposé entre le bec ou l'anche et les parties disposées en regard de la ligature, de manière à être appliqué par celle-ci contre le bec ou l'anche. Cet élément de calage comportera une partie faisant saillie entre les deux parties en regard de la ligature, la vis de serrage étant engagée dans une lumière de cette partie en saillie.

Dans cette réalisation, l'effort de serrage exercé par le vis dans la direction de son axe sera ainsi transformé en une pression exercée sur l'élément interposé entre le corps de la ligature et le bec ou l'anche de l'instrument, perpendiculairement au bec, ce qui se traduira par une répartition encore plus équilibrée des efforts exercés par la ligature ou le bec et l'anche de l'instrument.

Une forme de réalisation de l'invention va être décrite ci-après plus en détail, à titre d'exemple, en référence aux dessins annexés. Sur ces dessins :
La figure 1 est une vue en perspective d'une ligature de la technique antérieure, fabriquée par la Demanderesse, en position d'utilisation sur un bec de clarinette ;
La figure 2 est une vue analogue à la figure 1 d'une forme de réalisation de la ligature conforme à l'invention, également montée sur un bec de clarinette ;
La figure 3 est une vue en perspective éclatée illustrant plus clairement les différents constituants de la figure 3.

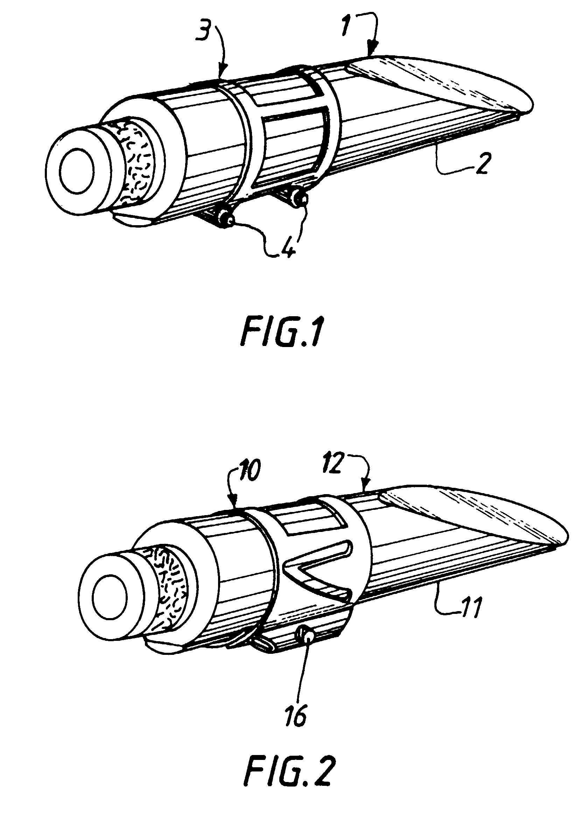

On se réfèrera d'abord à la figure 1, sur laquelle le bec de clarinette est désigné par la référence 1, l'anche par la référence 2, et le corps de la ligature d'un type connu destiné à maintenir l'anche 2 sur le bec 1 par la référence 3. Le corps de ligature est en un matériau déformable élastiquement, par exemple en métal ou en matière plastique, et il a un profil généralement cylindrique épousant la forme du bec 1 et de l'anche 2. La ligature comporte deux vis de serrage 4, réunissant des parties espacées disposées en regard et permettant de solidariser l'anche et le bec, par serrage de l'anche à l'aide de la ligature.

La présente invention vise à mieux répartir les efforts de serrage exercés par la ligature et à faciliter la mise en place de l'anche sur le bec en utilisant une unique vis de serrage.

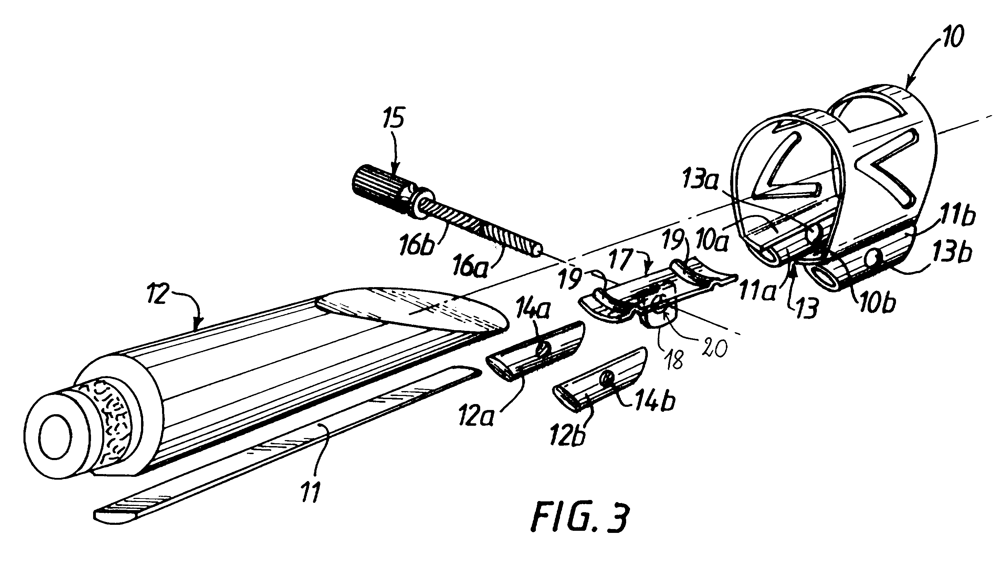

Dans ce but, comme représenté sur les figures 2 et 3, le corps de ligature 10, destiné à serrer l'anche 11 sur le bec de clarinette 12, a, comme précédemment, une forme générale cylindrique, et il est fendu en 13, parallèlement aux génératrices du bec et à l'anche 11, de manière à comporter deux parties 10a et 10b disposées en regard, que l'on désire rapprocher ou écarter l'une de l'autre, pour serrer ou desserrer l'anche 11. Des parties 10a et 10b, sont solidaires, à l'extérieur, deux fourreaux cylindriques 11a, 11b, dans lesquels sont logés de manière à pouvoir pivoter librement autour de leur axe deux éléments cylindriques, 12a, 12b.

Dans les fourreaux 11a, 11b sont ménagées des lumières 13a, 13b, tandis que les éléments 12a, 12b, comportent, percés transversalement en regard de ces lumières, deux alésages 14a, 14b, filetés intérieurement, les filetages des deux alésage ayant des pas inversés.

Une vis 15 comportant deux parties filetées décalées 16a, 16b, à filetages de pas inversés complémentaires de ceux des alésages 14a, 14b, est engagée dans ces derniers, à travers les lumières 13a, 13b, des fourreaux 11a, 11b.

Du fait des pas inversés des filetages des parties 16a, 16b de la vis 15, d'une part, des alésages 14a, 14b, d'autre part, il est possible de serrer ou de desserrer la ligature 10 sur le bec 12 et l'anche 11, en répartissant parfaitement et de façon symétrique les efforts exercés sur les deux parties 10a et 10b.

De préférence, les lumières 13a et 13b auront une forme ovalisée dans un sens favorable au déplacement de la vis de serrage, lorsque les éléments cylindriques 12a-12b pivotent dans les fourreaux 11a, 11b.

Comme représenté sur la figure 3, un élément de calage incurvé 17, de profil complémentaire de celui de l'anche 11, est avantageusement interposé entre celui-ci et les parties 10a et 10b de la ligature. Une partie 18 de l'élément de calage 17 fait saillie vers l'extérieur entre les parties 10a, 10b, et comprend une lumière 20, dans laquelle est engagée la tige de la vis 15. En vissant cette vis, les efforts de traction exercés sur les parties 10a, 10b de la ligature parallèlement à l'axe de la vis 15, en vue de les rapprocher l'une de l'autre, sont ainsi transmis à l'élément 17 sous la forme d'une compression, appliquant fermement cet élément 17 contre l'anche, perpendiculairement à celle-ci, de manière à mieux répartir encore les efforts de serrage. Avantageusement, l'élément de calage 17 comportera, sur sa face tournée vers le bec, dans un plan perpendiculaire à l'axe du bec, des nervures 19 faisant saillie en direction de celui-ci.

Alternativement, l'élément de calage 17 peut être appliqué contre le bec 12, dont il a alors une forme complémentaire. L'effet global de répartition des efforts est le même que précédemment.

On notera que l'élément 17, qui prend appui sur l'anche, agit indépendamment du collier de la ligature, qui enserre le bec. On notera également que les bords latéraux de l'anche ne sont pas en contact avec le collier.

Le corps 10 de la ligature pourra être, de façon connue, en un matériau rigide ou élastiquement déformable, par exemple en un métal ou alliage ou en matière plastique. Ce corps et l'élément de calage 17 pourront éventuellement être gainés de caoutchouc, d'une matière plastique souple ou d'un élastomère, prévenant le glissement de la ligature par rapport au bec et à l'anche et apportant à la ligature une plus grande souplesse.

L'invention apporte donc un moyen extrêmement simple et particulièrement facile à actionner, pour fixer une anche sur le bec d'un instrument à vent, en répartissant de façon symétrique et équilibrée les efforts de serrage exercés sur le bec et sur l'anche. Le fait d'utiliser une unique vis de serrage facilite en outre grandement les opérations de changement d'anche par l'instrumentiste.

## Revendications

1. Ligature souple en un matériau déformable élastiquement, apte à équiper le bec (12) d'un instrument à vent, cette ligature (10) ayant un profil sensiblement complémentaire de celui du bec, de manière à pouvoir enserrer celui-ci et une anche (11) interposée entre le bec et la ligature, deux parties (10a, 10b) espacées de la ligature comportant des bords respectifs disposés en vis-à-vis et sensiblement parallèles aux génératrices du bec, cette ligature étant caractérisée en ce que lesdites deux parties (10a, 10b) comportent chacune au moins un alésage fileté (14a, 14b) disposé en regard de l'alésage de l'autre partie transversalement à l'axe du bec, les filetages des deux alésages ayant des pas inversés, tandis qu'une vis de serrage (15), présentant deux filetages (16a, 16b) à pas inversés décalés suivant sa longueur et complémentaires des filetages des deux alésages (14a, 14b), est prévue pour coopérer avec ceux-ci en vue d'assembler d'une manière réglable les deux parties (10a, 10b) de la ligature disposées en vis-à-vis.

2. Ligature selon la revendication 1, caractérisée en ce qu'elle comporte une unique vis (15) associée à un alésage (14a, 14b) de chacune des deux parties (10a, 10b).

3. Ligature selon l'une des revendications 1 et 2, caractérisé en ce que chacune des parties (10a, 10b) comporte à l'extérieur, suivant chacun des bords disposés en vis-à-vis, un fourreau cylindrique (11a, 11b), dans lequel est logé un élément cylindrique (12a, 12b), apte à pivoter librement autour de son axe et dans lequel est pratiqué transversalement l'un des alésages filetés (14a, 14b), des lumières (13a, 13b) étant ménagées dans les fourreaux (11a, 11b) en regard des alésages (14a, 14b) pour le passage de la vis de serrage.

4. Dispositif selon l'une des revendications 1 à 3, caractérisé en ce que les lumières (13a, 13b) ont un profil ovalisé dans un sens favorisant le déplacement de la vis de serrage (15) lorsque les éléments cylindriques (12a, 12b) pivotent dans les fourreaux (11a, 11b).

5. Ligature selon l'une des revendications 1 à 4, caractérisée en ce qu'elle comporte de plus un élément de calage (17) rigide et incurvé, de profil complémentaire de celui de l'anche ou du bec, et destiné à être interposé entre le bec ou l'anche et les parties (10a, 10b) de la ligature disposées en regard, de manière à être appliqué par ces parties contre l'anche ou le bec.

6. Ligature selon la revendication 5, caractérisée en ce que l'élément de calage (17) comporte une partie (18) faisant saillie vers l'extérieur entre les parties (10a, 10b) de la ligature et une lumière (20) dans laquelle est engagée la vis de serrage (15).

7. Ligature selon la revendication 6, caractérisé en ce que, sur sa face tournée vers le bec (12) de l'instrument, l'élément de calage (17) comporte des nervures (19) faisant saillie vers l'anche dans un plan perpendiculaire à l'axe de celui-ci.

## Patentansprüche

1. Geschmeidige, aus einem elastisch verformbaren Werkstoff bestehende Ringklemme, die für die Ausrüstung eines Mundstücks (12) eines Blasinstruments geeignet ist, wobei die Ringklemme (10) ein im wesentlichen komplementär zu dem Mundstück (12) ausgebildetes Profil aufweist, so daß dieses und ein zwischen dem Mundstück und der Ringklemme angeordnetes Zungenblatt (11) geklemmt werden können, wobei zwei voneinander beabstandete Teile (10a,10b) jeweils einander gegenüberliegende Berandungen aufweisen und sich im wesentlichen parallel zu den Mantellinien des Mundstücks erstrecken, dadurch gekennzeichnet, daß die genannten beiden Teile (10a,10b) jeweils wenigstens eine Gewindebohrung (14a,14b) aufweisen, die bezüglich der Bohrung des jeweils anderen Teils quer zu der Achse des Mundstücks angeordnet ist, daß die Gewindeabschnitte der beiden Bohrungen einander entgegengerichtete Steigungen aufweisen, wobei eine Klemmschraube (15) vorgesehen ist, die entlang ihrer Länge zwei abgesetzte Gewindeabschnitte (16a,16b) mit einander entgegengerichteten Steigungen aufweist, die komplementär zu den Steigungen der beiden Bohrungen (14a. 14b) ausgebildet sind, um mit diesen in steuerbarer Weise bei der Montage der beiden einander gegenüberliegenden Teile (10a,10b) der Ringklemme zusammenzuwirken.

2. Ringklemme nach Anspruch 1, dadurch gekennzeichnet. daß sie eine einzige Schraube (15) umfaßt, die mit einer Bohrung (14a,14b) eines jeden der beiden Teile (10a,10b) in Wirkverbindung steht.

3. Ringklemme nach einem der Ansprüche 1 und 2, dadurch gekennzeichnet, daß jedes der Teile (10a,10b) an seiner Außenseite an einem jeden der einander gegenüberliegenden Berandungen eine zylindrische Hülse (11a,11b) trägt, in der ein zylindrisches Element (12a,12b) aufgenommen ist, und zwar in einer um seine Achse frei drehbaren Weise, wobei in das zylindrische Element in Querrichtung eine der Gewindebohrungen (14a,14b) eingeformt ist, wobei in der Hülse (11a,11b) Durchgangsbohrungen (13a,13b) angeordnet sind, die zu den Bohrungen (14a,14b) fluchtend verlaufen, um die Aufnahme der Klemmschraube zu ermöglichen.

4. Vorrichtung nach einem der Ansprüche 1 bis 3, dadurch gekennzeichnet, daß die Durchgangsbohrungen (13a,13b) ein ovales Profil haben, und zwar in einem, die Verlagerung der Klemmschraube (15) ermöglichenden Sinn. nachdem die zylindrischen Elemente (12a,12b) in den Hülsen (11a,11b) drehbar sind.

5. Ringklemme nach einem der Ansprüche 1 bis 4, dadurch gekennzeichnet, daß sie ferner ein starres und zur Innenseite hin gekrümmtes Keilelement (17) aufweist, dessen Profil komplementär zu demjenigen des Zungenblattes oder des Mundstücks ausgebildet ist und welches dazu bestimmt ist, um zwischen dem Mundstück oder dem Zungenblatt und den Teilen (10a,10b) der Ringklemme, die sich einander gegenüberliegen, angeordnet zu werden, um auf diese Weise mittels der genannten Teile an dem Zungenblatt oder dem Mundstück anzuliegen.

6. Ringklemme nach Anspruch 5, dadurch gekennzeichnet, daß das Keilelement (17) ein Teil (18) aufweist, welches zur Außenseite hin zwischen den Teilen (10a,10b) der Ringklemme herausragt und eine Durchgangsbohrung (20) aufweist, in der die Klemmschraube (15) aufgenommen ist.

7. Ringklemme nach Anspruch 6, dadurch gekennzeichnet, daß das Keilelement (17) auf der dem Mundstück (12) des Instruments zugekehrten Seite Rippen (19) aufweist, die in Richtung auf das Zungenblatt hin in einer senkrecht zu dessen Ebene verlaufenden Richtung herausragen.

## Claims

1. A flexible ligature of a resiliently deformable material, suitable for use with the mouthpiece (12) of a wind instrument, this ligature (10) having a shape which is substantially complementary to that of the mouthpiece, in such a way as to be able to grip the latter and a reed (11) interposed between the mouthpiece and the ligature, two spaced portions (10a, 10b) of the ligature comprising respective edges disposed opposite each other and substantially parallel with the generating lines of the mouthpiece, this ligature of being characterised in that said two portions (10a, 10b) each comprise at least one threaded bore (14a, 14b) disposed facing the bore in the other portion in transverse relation to the axis of the mouthpiece, the threads of the two bores having reverse pitches, while a tightening screw (15), having two threads (16a, 16b) with reverse pitches offset over its length and complementary to the threads of the two bores (14a, 14b), is provided to cooperate therewith with a view to assembling in adjustable manner the two portions (10a, 10b) of the ligature disposed opposite each other.

2. A ligature according to claim 1, characterised in that it comprises a single screw (15) associated with a bore (14a, 14b) in each of the two portions (10a, 10b).

3. A ligature according to either one of claims 1 and 2, characterised in that each of the portions (10a, 10b) comprises on the outside, along each of the edges disposed opposite each other, a cylindrical sleeve (11a, 11b), in which there is accommodated a cylindrical element (12a, 12b) capable of pivoting freely about its axis and in which there is formed transversely one of the threaded bores (14a, 14b), slots (13a, 13b) being formed in the sleeves (11a, 11b) opposite the bores (14a, 14b) for passage of the tightening screw.

4. A device according to any one of claims 1 to 3, characterised in that the slots (13a, 13b) are oval in shape, so as to promote displacement of the tightening screw (15) when the cylindrical elements (12a, 12b) pivot in the sleeves (11a, 11b).

5. A ligature according to any one of claims 1 to 4, characterised in that it additionally comprises a rigid curved adjusting element (17), having a shape complementary to that of the reed or of the mouthpiece and designed to be interposed between the mouthpiece or the reed and the portions (10a, 10b) of the ligature disposed facing each other, in such a way as to be applied by these portions against the reed or the mouthpiece.

6. A ligature according to claim 5, characterised in that the adjusting element (17) comprises a portion (18) projecting outwards between the portions (10a, 10b) of the ligature and a slot (20) in which there is engaged the tightening screw (15).

7. A ligature according to claim 6, characterised in that, on its surface facing the mouthpiece (12) of the instrument, the adjusting element (17) comprises ribs (19) projecting towards the reed in a plane perpendicular to the axis thereof.
